# EUROPÄISCHE PATENTANMELDUNG

(11) **EP 4 471 514 A1**
(43) Veröffentlichungstag der Anmeldung: **04.12.2024**
(21) Anmeldenummer: 24173108.2
(22) Anmeldetag: 29.04.2024
(51) Int. Cl.: G05B 19/18, G05B 19/406

(54) **MASCHINENSYSTEM ZUM BEARBEITEN UND/ODER HANDHABEN VON PLATTENFÖRMIGEN WERKSTÜCKEN, SOWIE VERFAHREN ZUM BETREIBEN EINES SOLCHEN MASCHINENSYSTEMS**

(30) Priorität: 11.05.2023 DE 102023112506
(71) Anmelder: HOMAG Plattenaufteiltechnik GmbH, 75365 Calw (DE)
(72) Erfinder: Galambos, Christian, 72189 Vöhringen (DE); Wirth, Sven, 71263 Weil der Stadt (DE); Buer, Benedikt, 70563 Stuttgart (DE); Groß, Mathias, 72218 Wildberg (DE); Müller, Patrick, 72293 Glatten (DE); Zimmermann, Timo, 72160 Horb (DE)
(74) Vertreter: DREISS Patentanwälte PartG mbB

(57) **Zusammenfassung**

Maschinensystem (10), umfassend: eine Maschine (12) mit einer ersten Recheneinrichtung (14), wobei die Maschine (12) bei einem Nutzer (20) der Maschine (12) angeordnet ist, und eine zweite Recheneinrichtung (16), die von der ersten Recheneinrichtung (14) entfernt bei einem Anbieter (38) angeordnet ist, und eine Datenkommunikationseinrichtung (18), mit der Daten zwischen der ersten Recheneinrichtung (14) und der zweiten Recheneinrichtung (16) übertragen werden können. Es wird vorgeschlagen, dass auf der zweiten Recheneinrichtung (16) ein Datensatz (52) abgespeichert ist, der den aktuellen Stand einer Hardware (40) und einer Software (42) der Maschine (12) wiedergibt, und dass die zweite Recheneinrichtung (16) ausgebildet ist, um anhand des Datensatzes (52) zu prüfen, ob die Maschine (12) nach Durchführung einer Maßnahme (66) eine bisher noch nicht vorhandene Funktion (58) aufweisen kann.

## Beschreibung

Die Erfindung betrifft ein Maschinensystem sowie ein Verfahren zum Betreiben eines Maschinensystems nach den Oberbegriffen der nebengeordneten Ansprüche.

Aus der DE 10 2021 124 153 A1 ist es bekannt, automatisch einen Parameter zu ermitteln, der eine Qualität an einem durch einen Bearbeitungsprozess bearbeiteten Werkstück charakterisiert. Konkret wird die Qualität einer durch einen Sägevorgang erzeugten Schnittkante ermittelt.

Abhängig davon kann entschieden werden, ob ein Verschleißteil in Form eines Sägeblatts durch ein gleiches, aber nicht verschlissenes Sägeblatt ausgetauscht werden soll. Aus der DE 10 2020 108 041 A1 ist ein Verfahren zur Lizenzierung von Softwaremodulen einer technischen Einrichtung bekannt. Bei diesem Verfahren wird ein zur Ausführung einer bestimmten technischen Funktion benötigtes Softwaremodul ermittelt, und bei Bedarf wird eine Lizenz für die Nutzung des Softwaremoduls über eine Datenverbindung von einem Lizenzserver angefordert.

Die vorliegende Erfindung hat die Aufgabe, ein Maschinensystem und ein Verfahren zu dessen Betrieb bereitzustellen, welches auf einfache Art und Weise einen optimalen Betrieb der Maschine des Maschinensystems ermöglicht.

Die der Erfindung zugrunde liegende Aufgabe wird durch ein Maschinensystem und ein Verfahren zum Betreiben eines Maschinesystems mit den Merkmalen der nebengeordneten Ansprüche gelöst. Vorteilhafte Weiterbildungen sind in Unteransprüchen angegeben.

Ein Vorteil der Erfindung liegt darin, dass praktisch jederzeit und auf sehr einfache Art und Weise in Erfahrung gebracht werden kann, ob eine bestimmte, in der Vergangenheit vermisste oder in der Zukunft gewünschte Funktion bei der Maschine des erfindungsgemäßen Maschinensystems realisiert werden kann. Auf diese Weise wird es dem Nutzer der Maschine ermöglicht, auf einfache Art und Weise Maßnahmen zur Steigerung der Produktivität oder Qualität oder zur Verringerung des Energieverbrauchs zu prüfen und einzuleiten.

Konkret wird dies erreicht durch ein Maschinensystem zum Bearbeiten und/oder Handhaben großformatiger plattenförmiger Werkstücke, das mindestens eine Maschine, insbesondere eine Werkzeugmaschine umfasst. Solche großformatigen plattenförmigen Werkstücke werden beispielsweise für die Möbelherstellung verwendet. "Plattenförmig" bedeutet, dass die Dicke deutlich kleiner ist als die Länge und die Breite. "Großformatig" bedeutet, dass die Abmessungen beispielsweise für die Herstellung von Elementen für die Möbelherstellung geeignet sind. Grundsätzlich denkbar ist auch ein Maschinensystem mit mehreren Maschinen. Bei der Maschine kann es sich beispielsweise um eine Holzbearbeitungsmaschine handeln, insbesondere um eine Plattenaufteilanlage in Form einer Plattenaufteilsäge. Eine solche Plattenaufteilsäge umfasst typischerweise einen Zuführtisch mit einem Programmschieber mit Spannzangen, einen Maschinentisch mit einem Druckbalken und einem unter dem Maschinentisch angeordneten Sägeaggregat, und einem Entnahmetisch. Typischerweise werden durch eine solche Holzbearbeitungsmaschine Holzteile für die Möbelherstellung hergestellt. Möglich ist aber auch, dass die Maschine eine Handlingvorrichtung für Plattenmaterial und/oder Werkstücke, beispielsweise ein Plattenlager und/oder einen Roboter, umfasst oder ein solches bzw. ein solcher ist. Denkbar ist auch, dass es sich bei einer als Werkzeugmaschine ausgebildeten Maschine um eine Kantenbearbeitungsmaschine oder eine CNC-Maschine beispielsweise mit Fräs- und/oder Bohrwerkzeugen oder ähnliches handelt. Plattenaufteilsäge und CNC-Maschine sind jedoch besonders bevorzugte Maschinen.

Die Maschine umfasst mindestens eine erste Recheneinrichtung mit einer Daten- und Softwarespeichereinrichtung, Software und einem die Software verarbeitenden Prozessor. Typischerweise handelt es sich bei der ersten Recheneinrichtung um einen Computer, der neben den angesprochenen Komponenten zusätzlich noch ein HMI (Human Machine Interface) beispielsweise in Form eines Touchscreens oder ähnlichem aufweisen kann. Die Funktion der ersten Recheneinrichtung ist typischerweise auch die Steuerung und Regelung von Komponenten der Maschine, so dass in einer bevorzugten Ausführungsform ein mindestens weitgehend automatischer Betrieb der Maschine möglich ist. Die Maschine ist zusammen mit der ersten Recheneinrichtung bei einem Nutzer der Maschine angeordnet. Beispielsweise kann die Maschine in einer Maschinenhalle eines Möbelherstellers oder einer Schreinerei angeordnet sein. Denkbar sind aber auch Maschinensysteme, bei denen eine Mehrzahl von ersten Recheneinrichtungen vorhanden ist im Sinne einer ganzen Rechnerhierarchie.

Zu dem Maschinensystem gehört auch eine zweite Recheneinrichtung mit einer Daten- und Softwarespeichereinrichtung, Software und einem die Software verarbeitenden Prozessor. Auch hier handelt es sich typischerweise um einen Computer, der neben den angesprochenen Komponenten zusätzlich noch ein HMI aufweisen kann. Erfindungsgemäß ist die zweite Recheneinrichtung von der ersten Recheneinrichtung entfernt bei einem Anbieter angeordnet. "Entfernt" angeordnet bedeutet vorliegend, dass die zweite Recheneinrichtung nicht in unmittelbarer Nachbarschaft zu der ersten Recheneinrichtung und typischerweise nicht im selben Betriebsstandort und typischerweise nicht unter der Kontrolle des Nutzers angeordnet ist. Bei dem Anbieter kann es sich beispielsweise um den Hersteller der Maschine handeln, um einen Händler der Maschine oder um einen unabhängigen Dienstleister.

Weiterhin gehört zu dem erfindungsgemäßen Maschinensystem eine Datenkommunikationseinrichtung, mit der Daten zwischen der ersten Recheneinrichtung und der zweiten Recheneinrichtung übertragen werden können. Die Datenkommunikationseinrichtung kann beispielsweise zwischen einer Schnittstelle der ersten Recheneinrichtung und einer Schnittstelle der zweiten Recheneinrichtung angeordnet sein. Die Datenkommunikationseinrichtung kann drahtgebunden oder drahtlos arbeiten bzw. mindestens zum Teil drahtlos und zum Teil drahtgebunden sein. Möglich ist die Datenkommunikation beispielsweise über das Internet. Mittels der Datenkommunikationseinrichtung werden mindestens Daten von der ersten Recheneinrichtung zur zweiten Recheneinrichtung übertragen. Vorzugsweise werden von der Datenkommunikationseinrichtung aber auch Daten von der zweiten Recheneinrichtung zur ersten Recheneinrichtung übertragen.

Erfindungsgemäß ist die zweite Recheneinrichtung so ausgebildet, dass auf ihr ein Datensatz abgespeichert ist, der im Wesentlichen jederzeit den aktuellen Stand mindestens eines Teils einer Hardware der Maschine und den aktuellen Stand mindestens eines Teils einer Software der Maschine wiedergibt. Dieser Datensatz kann daher auch als zumindest teilweiser oder vollständiger "digitaler Zwilling" der Maschine bezeichnet werden.

Der Datensatz repräsentiert zum einen den aktuellen Status der Maschine im Hinblick auf ihre physischen Komponenten. Eine solche physische Komponente kann ein Werkzeug, ein Werkzeugantrieb, eine Fördereinrichtung für ein Werkstück, eine Handhabungseinrichtung für ein Werkstück, ein Sensor, eine Zusatzmaschine, eine Recheneinrichtung, und Ähnliches sein. Beispielsweise kann der Datensatz Informationen zum Typ der in der Maschine verbauten physischen Komponente enthalten, zu deren Alter bzw. Betriebsstunden, zu typischen Leistungsdaten der Komponenten, ob eine physische Komponente zwar verbaut, aber noch nicht in Betrieb genommen wurde, etc.

Zum anderen repräsentiert der Datensatz den aktuellen Status der Maschine im Hinblick auf ihre Software, und zwar sowohl betreffend durch installierte Softwarekomponenten theoretisch realisierbare Funktionen als auch betreffend durch installierte Software-Komponenten tatsächlich freigeschaltete Funktionen. Ebenso kann der Datensatz den Revisionsstand installierter Softwarekomponenten repräsentieren, etc..

Es ermöglicht der Datensatz also, den tatsächlichen mechatronischen Aufbau der Maschine wiederzugeben, also unter anderem beispielsweise, welche Umbauten zwischenzeitlich an der Maschine vorgenommen wurden, welchen Softwarestand die Maschine hat, etc. Wie oben erwähnt, gibt der Datensatz vorzugsweise "im Wesentlichen jederzeit" den aktuellen Stand wieder. Dies setzt voraus, dass möglichst häufig entsprechende Daten von der ersten Recheneinrichtung über die Datenkommunikationseinrichtung an die zweite Recheneinrichtung übertragen werden. Beispielsweise können Daten regelmäßig zu bestimmten Zeitpunkten, beispielsweise nachts, oder nach vorgenommenen Änderungen an der Maschine, oder auch auf Anfrage entweder durch den Nutzer oder durch den Anbieter übertragen werden.

Erfindungsgemäß ist die zweite Recheneinrichtung so ausgebildet, dass sie anhand des Datensatzes prüfen kann, ob die Maschine nach Durchführung einer Maßnahme eine bisher noch nicht vorhandene Funktion aufweisen kann und/oder ob durch die Durchführung einer Maßnahme eine bisher bereits vorhandene Funktion verbessert werden kann. Es wird also geprüft, welche Funktionen geschaffen werden können, veränderbar sind oder veränderbar gemacht werden können. Das Ergebnis der Prüfung kann in einem einfachsten Fall die Information sein "Ja, die Maschine kann nach Durchführung einer Maßnahme eine bisher noch nicht vorhandene Funktion aufweisen" oder "Nein, es sind keine Maßnahmen möglich, durch die eine bisher noch nicht vorhandene Funktion ermöglicht werden könnte." Denkbar ist auch die Information "Ja, eine bestehende Funktion kann durch Durchführung einer Maßnahme verbessert werden". Möglich und bevorzugt ist jedoch, dass mehr oder weniger detaillierte Informationen erstellt werden, beispielsweise eine Liste möglicher Funktionen und/oder möglicher verbesserter Funktionen und zugehöriger notwendiger Maßnahmen.

Eine mögliche Maßnahme kann beispielsweise die Freischaltung einer bisher zwar hardwaretechnisch und softwaretechnisch vorhandenen, aber noch nicht freigeschaltete Funktion sein. Eine weitere mögliche Maßnahme kann das Aufspielen eines Updates für eine Softwarekomponente sein. Eine weitere mögliche Maßnahme kann das Aufspielen einer zusätzlichen Softwarekomponente sein. Eine ebenfalls mögliche Maßnahme kann der Austausch einer vorhandenen Hardwarekomponente oder der Einbau einer zusätzlichen Hardwarekomponente sein.

Eine bisher noch nicht vorhandene Funktion, die durch die Maßnahme ermöglicht wird, kann beispielsweise eine spezielle Handhabung eines Werkstücks, die Durchführung eines speziellen Bearbeitungsvorgangs, die Verwendung eines speziellen Werkzeugs, o. ä. beinhalten. Bei einer Plattenaufteilsäge kann die Funktion beispielsweise die Durchführung eines Spannungsfreischnitt sein, durch den innere Spannungen in einem Ausgangswerkstück reduziert werden können. Eine bisher noch nicht vorhandene Funktion, die durch die Maßnahme ermöglicht wird, kann beispielsweise die Verwendung eines speziellen Aggregates oder einer speziellen Teilmaschine o.ä. beinhalten. Auch kann die noch nicht vorhandene oder verbesserte Funktion einen Softwarealgorithmus z.B. für eine Abstapelung von Werkstücken oder bei einer Plattenaufteilsäge eine Schnittplanoptimierung betreffen.

Zusammenfassend kann die Erfindung also beispielhaft einen automatischen Prozess mittels einer Cloud-Architektur ermöglichen, durch den Daten aus unterschiedlichen Systemen gebündelt und mit Daten aus anderen Systemen verglichen werden können. Dabei kann der Datensatz, der den aktuellen Zustand der Maschine wiedergibt, beispielsweise 3D-Daten, elektrotechnische Daten, Steuerungsdaten und Softwaredaten beinhalten. Auch können zwischenzeitlich vorgenommene Umbauten datentechnisch abgebildet sein. Dabei kann auch eine Prüfung auf fehlerhafte Umbauten beinhaltet sein. Am Ende erfolgt dann beispielsweise eine Prüfung, welche bisher noch nicht vorhandenen Funktionen mit dem festgestellten Zustand der Maschine möglich sind, und welche bisher noch nicht vorhandenen Funktionen mit einem geänderten Zustand der Maschine möglich sind. Der Anbieter kann dann beispielsweise dem Nutzer anbieten, die Funktion einfach freizuschalten, oder ein Update der Software durchzuführen oder die Maschine umzurüsten oder aufzurüsten. Dabei kann die Prüfung der Funktion direkt von der Maschine angefragt werden, es kann aber auch möglich sein, dass die Kommunikation/Anfrage zentral über einen Anlagenrechner oder einen Zentralrechner läuft.

Bei einer Weiterbildung ist vorgesehen, dass das Maschinensystem eine zweite Ausgabeeinrichtung beim Anbieter aufweist, wobei die zweite Recheneinrichtung und die zweite Ausgabeeinrichtung ausgebildet sind, um den Anbieter darüber zu informieren, welche bisher noch nicht vorhandene oder welche verbesserte Funktion die Maschine nach Durchführung einer Maßnahme aufweisen kann. Dies gestattet es dem Anbieter, den Nutzer über die mögliche Funktion seiner Maschine zu informieren und ihm ein entsprechendes Angebot für die Realisierung zu machen.

Bei einer Weiterbildung ist vorgesehen, dass das Maschinensystem eine zweite Ausgabeeinrichtung beim Anbieter aufweist, wobei die zweite Recheneinrichtung und die zweite Ausgabeeinrichtung ausgebildet sind, um den Anbieter darüber zu informieren, welche Maßnahme durchgeführt werden muss, damit die Maschine die bisher noch nicht vorhandene oder die verbesserte Funktion aufweisen kann. Dies gestattet es dem Anbieter, den Nutzer über die mögliche zur Realisierung einer bestimmten Funktion notwendige Maßnahme zu informieren und ihm ein entsprechendes Angebot für die Realisierung zu machen.

Bei einer Weiterbildung ist vorgesehen, dass das Maschinensystem eine vorzugsweise mit der ersten Recheneinrichtung verbundene erste Ausgabeeinrichtung beim Nutzer aufweist, wobei die erste Ausgabeeinrichtung und vorzugsweise auch die erste Recheneinrichtung ausgebildet sind, um den Nutzer darüber zu informieren, welche bisher noch nicht vorhandene Funktion und/oder welche verbesserte Funktion die Maschine nach Durchführung einer Maßnahme aufweisen kann. Dies gestattet es dem Nutzer, frühzeitig über die Möglichkeiten zur Realisierung einer bestimmten Funktion informiert zu werden und ein entsprechendes Angebot beim Anbieter einzuholen.

Bei einer Weiterbildung ist vorgesehen, dass die erste Ausgabeeinrichtung und vorzugsweise auch die erste Recheneinrichtung ausgebildet sind, um den Nutzer darüber zu informieren, welche Maßnahme durchgeführt werden muss, damit die Maschine die bisher noch nicht vorhandene Funktion aufweisen kann. Dies gestattet es dem Nutzer, frühzeitig den Aufwand abzuschätzen, der notwendig ist, um eine bestimmte Funktion realisieren zu können. Die Information kann auch auf einer Recheneinrichtung in einer Arbeitsvorbereitung oder auf einem Smart-Device angezeigt werden. Anstelle der ersten Recheneinrichtung könnte auch ein zentraler Rechner des Nutzers eingesetzt werden.

Bei einer Weiterbildung ist vorgesehen, dass die erste Ausgabeeinrichtung und vorzugsweise auch die erste Recheneinrichtung ausgebildet sind, um den Nutzer darüber zu informieren, welche Kosten durch die Maßnahme verursacht werden und/oder welche Vorteile durch die Maßnahme erzielt werden. Beispielsweise kann angezeigt werden, welche Leistungssteigerungen und/oder Einsparungen aufgrund einer Maßnahme möglich sind. So kann beispielsweise das Thema Nachhaltigkeit adressiert werden, es könnte aber angezeigt werden, dass ein anderes Spektrum von Werkstücken bearbeitet werden kann. Dies gestattet es dem Nutzer, frühzeitig eine Kosten-Nutzen-Analyse im Hinblick auf eine bestimmte gewünschte Funktion durchführen zu können.

Bei einer Weiterbildung ist vorgesehen, dass die zweite Recheneinrichtung eine Datenbank aufweist oder auf eine Datenbank zugreifen kann, in der Datensätze abgespeichert sind, welche mögliche Funktionen der Maschine mit hardwaretechnischen und/oder softwaretechnischen Voraussetzungen verknüpfen, die die Maschine erfüllen muss, um eine Funktion aufweisen zu können. Dies ist eine softwaretechnisch einfache Realisierungsmöglichkeit.

Bei einer Weiterbildung ist vorgesehen, dass die zweite Recheneinrichtung ausgebildet ist, um die Prüfung in bestimmten zeitlichen Abständen und/oder zu bestimmten Zeitpunkten und/oder jedes Mal nach einer Änderung der Hardware der Maschine und/oder jedes Mal nach einer Änderung der Software der Maschine durchzuführen. Auf diese Weise wird sichergestellt, dass die Maschine mehr oder weniger jederzeit einen optimalen Betriebszustand aufweisen kann.

Bei einer Weiterbildung ist vorgesehen, dass die zweite Recheneinrichtung ausgebildet ist, um die Prüfung auf Anfrage des Nutzers nach einer spezifischen und bisher noch nicht vorhandenen Funktion durchzuführen, wobei die Maschine vorzugsweise eine Eingabeeinrichtung für die Anfrage des Nutzers aufweist. Dies gestattet es dem Nutzer, sehr spezifisch und zielgerichtet nach einer Modernisierungsmöglichkeit seiner Maschine anzufragen.

Nachfolgend wird eine Ausführungsform der Erfindung unter Bezugnahme auf die beigefügte Zeichnung erläutert. In der Zeichnung zeigen:
- Figur 1: einen schematisierten Aufbau eines Maschinensystems; und
- Figur 2: ein Flussdiagramm eines Verfahrens zum Betreiben des Maschinensystems von Figur 1.

Nachfolgend tragen funktionsäquivalente Elemente und Bereiche in unterschiedlichen Figuren die gleichen Bezugszeichen. Sie werden typischerweise nur bei der erstmaligen Erwähnung stärker im Detail erläutert.

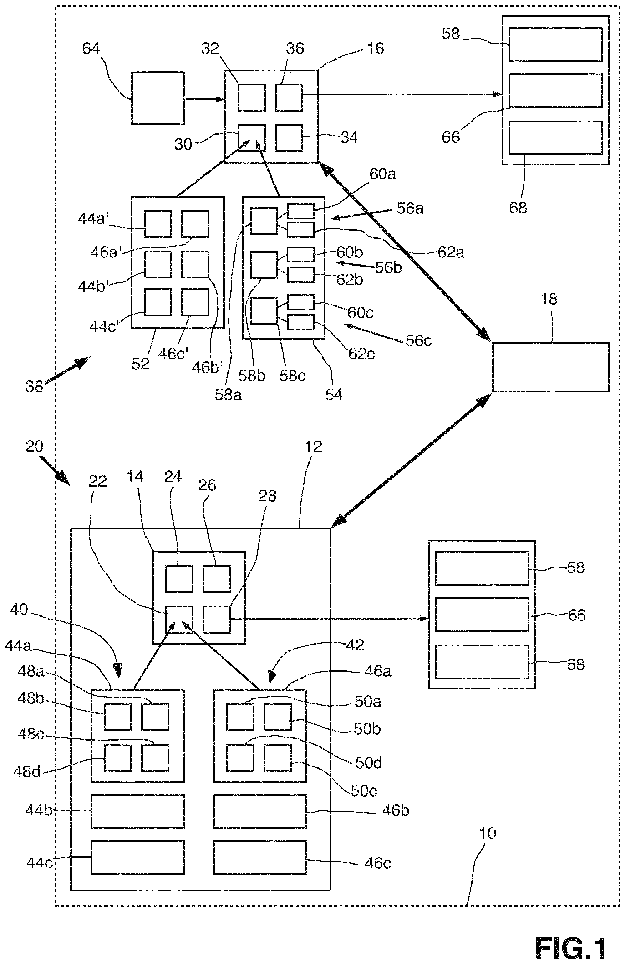

Ein Maschinensystem trägt in Figur 1 insgesamt das Bezugszeichen 10. Es umfasst eine Maschine 12 mit einer ersten Recheneinrichtung 14, eine zweite Recheneinrichtung 16 und eine Datenkommunikationseinrichtung 18. Mit der Datenkommunikationseinrichtung 18 können Daten zwischen der ersten Recheneinrichtung 14 und der zweiten Recheneinrichtung 16 übertragen werden. Vorliegend beispielhaft handelt es sich bei der Datenkommunikationseinrichtung 18 um eine bidirektionale Datenkommunikationseinrichtung, welche Daten sowohl von der ersten Recheneinrichtung 14 zur zweiten Recheneinrichtung 16 als auch von der zweiten Recheneinrichtung 16 zur ersten Recheneinrichtung 14 übertragen kann. Die Datenkommunikationseinrichtung 18 kann teilweise oder vollständig drahtgebundene oder drahtlos arbeiten.

Bei der Maschine 12 handelt es sich vorliegend beispielhaft um eine Werkzeugmaschine, beispielsweise um eine Holzbearbeitungsmaschine zum Bearbeiten von großformatigen plattenförmigen Werkstücken, insbesondere um eine Plattenaufteilsäge. Eine solche Plattenaufteilsäge umfasst typischerweise einen Zuführtisch mit einem Programmschieber mit Spannzangen, einen Maschinentisch mit einem Druckbalken und einem Sägeaggregat, und einen Entnahmetisch. Bei einer solchen Plattenaufteilsäge liegt typischerweise ein großformatiges flaches Ausgangswerkstück auf dem Zuführtisch, und dieses wird mittels Programmschieber und Spannzangen dem Maschinentisch und dem Sägeaggregat zugeführt, wo es zunächst in meist streifenförmige aufgeteilte Werkstücke aufgeteilt wird. Diese können auf unterschiedliche Weise nochmals dem Sägeaggregat zugeführt werden, um nochmals aufgeteilt zu werden. Die Maschine 12 ist bei einem Nutzer 20 angeordnet, im Falle einer Plattenaufteilsäge beispielsweise bei einem Möbelhersteller oder einem Schreiner. Alternativ kann es sich bei der Maschine 12 auch um eine andere Maschine handeln, beispielsweise um eine Kantenbearbeitungsmaschine, eine CNC-Maschine, eine Handhabungseinrichtung, einen Roboter, eine Lagereinrichtung, etc. Ferner kann das Maschinensystem eine Mehrzahl von Maschinen umfassen, beispielsweise im Verbund eine Werkzeugmaschine, eine Handhabungseinrichtung, einen Roboter, eine Lagereinrichtung, etc.

Die erste Recheneinrichtung 14 umfasst eine Daten- und Softwarespeichereinrichtung 22, Software 24, einen die Software 24 verarbeitenden Prozessor 26 und ein HMI 28, beispielsweise einen Touchscreen. Das HMI 28 dient unter anderem zur Anzeige von Informationen und kann daher auch als erste Ausgabeeinrichtung bezeichnet werden. Die zweite Recheneinrichtung 16 umfasst ebenfalls eine Daten- und Softwarespeichereinrichtung 30, Software 32, einen die Software 32 verarbeitenden Prozessor 34, und ein HMI 36, beispielsweise einen Touchscreen. Auch das HMI 36 dient unter anderem zur Anzeige von Informationen und kann daher auch als zweite Ausgabeeinrichtung bezeichnet werden. Die zweite Recheneinrichtung 16 ist bei einem Anbieter 38 angeordnet, bei dem es sich beispielsweise um einen Hersteller der Maschine 12, einen Händler der Maschine 12 oder einen sonstigen Dienstleister handeln kann. Die zweite Recheneinrichtung 16 kann auch als typische "Cloud" ausgebildet sein bzw. eine solche Funktion erfüllen.

Die Maschine 12 wird unter anderem durch Hardware 40 und Software 42 geprägt, wobei die Hardware 40 eine Mehrzahl von Hardwarekomponenten 44 und die Software 42 eine Mehrzahl von Softwarekomponenten 46 aufweist. Höchst exemplarisch sind vorliegend drei Hardwarekomponenten 44a-c und drei Softwarekomponenten 46a-c gezeichnet. Jede Hardwarekomponente 44a-c wird wiederum durch verschiedene Eigenschaften 48 definiert, von denen vorliegend beispielhaft für die Hardwarekomponente 44a vier Eigenschaften gezeichnet sind, nämlich Funktion 48a, Typ 48b, Betriebsstunden 48c und Wartungsstand 48d. Es versteht sich, dass grundsätzlich auch andere und zusätzliche Eigenschaften 48 denkbar sind. Ebenso ist jede Softwarekomponente 46a-c durch verschiedene Eigenschaften 50 definiert, von denen vorliegend beispielhaft für die Softwarekomponente 46a vier Eigenschaften gezeichnet sind, nämlich Release 50a, grundsätzlich mögliche Funktionen 50b, tatsächlich freigeschaltete Funktionen 50c und notwendige Hardware 50d. Es versteht sich, dass grundsätzlich auch andere und zusätzliche Eigenschaften 50 denkbar sind.

Die Eigenschaften 48 zu jeder Hardwarekomponente 44 und die Eigenschaften 50 zu jeder Softwarekomponente 46, die aktuell für die Hardware 40 und die Software 42 der Maschine 12 gelten, werden über die Datenkommunikationseinrichtung 18 an die zweite Recheneinrichtung 16 übertragen. Auf diese Weise wird in der zweiten Recheneinrichtung 16 eine Art digitaler Zwilling der Maschine 12 gebildet in Form eines Datensatzes 52, der in Form entsprechender Daten die Eigenschaften 44'a-c der jeweiligen Hardwarekomponenten 44a-c und die Eigenschaften 46'a-c der jeweiligen Softwarekomponente 46a-c enthält. Durch den Datensatz 52 wird somit der aktuelle Stand der Hardware 40 und der Software 42 der Maschine 12 wiedergegeben.

Die zweite Recheneinrichtung 16 ist durch entsprechende Software, die vom Prozessor 34 verarbeitet wird, so ausgebildet, dass sie anhand des Datensatzes 52 prüfen kann, ob die Maschine 12 nach Durchführung einer Maßnahme eine bisher noch nicht vorhandene Funktion aufweisen kann. Hierzu verfügt die zweite Recheneinrichtung 16 über eine Datenbank 54, in der eine Mehrzahl von Datensätzen 56, vorliegend beispielhaft drei Datensätze 56a-c, abgespeichert sind. Diese Datensätze 56a-c verknüpfen mögliche Funktionen 58a-c der Maschine 12 mit hardwaretechnischen Voraussetzungen 60a-c und softwaretechnischen Voraussetzungen 62a-c. Diese Voraussetzungen 60a-c und 62a-c müssen erfüllt sein, damit die Maschine 12 eine jeweilige Funktion 58a-c aufweisen kann. Zu den softwaretechnischen Voraussetzungen 62a-c kann auch gehören, dass vom Nutzer 20 eine entsprechende Lizenz erworben wird.

Eine Maßnahme, die durchgeführt werden muss, damit die Maschine 12 eine bisher noch nicht vorhandene Funktion aufweisen kann, besteht somit darin, die entsprechenden softwaretechnischen Voraussetzungen 62 bzw. hardwaretechnischen Voraussetzungen 60 zu erfüllen, beispielsweise durch Ersatz einer bisher vorhandenen Hardwarekomponente, oder durch Einbau einer zusätzlichen Hardwarekomponente, oder durch eine softwaretechnische Aktivierung einer bisher bereits vorhandenen Hardwarekomponente, durch ein Update einer Softwarekomponente, durch ein Aufspielen einer zusätzlichen Softwarekomponente, etc.

Für die Prüfung durch die zweite Recheneinrichtung 16 werden auch Informationen genutzt, die die zweite Recheneinrichtung 16 von einem Lizenzserver 64 erhält, in dem abgespeichert ist, welche speziellen Lizenzen für die Nutzung bestimmter Funktionen 58 der Nutzer 20 bisher erworben hat. Ferner wird bei der Prüfung berücksichtigt, ob bei der spezifischen Maschine 12 die für eine bestimmte Funktion 58 notwendige hardwaretechnische Voraussetzung 60 überhaupt geschaffen werden kann.

Das Ergebnis der Prüfung durch die zweite Recheneinrichtung 16 kann beispielsweise am HMI 36 dem Anbieter 38 angezeigt werden. Die zweite Recheneinrichtung 16 und das HMI 36 sind also derartig ausgebildet, dass der Anbieter 38 darüber informiert werden kann, welche bisher noch nicht vorhandene Funktion 58 die Maschine 10 nach Durchführung einer Maßnahme aufweisen kann, und es wird der Anbieter 38 auch darüber informiert, welche Maßnahme 66 durchgeführt werden muss, damit die Maschine 12 die bisher noch nicht vorhandene Funktion 58 aufweisen kann. Schließlich werden dem Anbieter 38 auch Informationen zu den für die Durchführung der Maßnahme 66 erforderlichen Kosten 68 ausgegeben.

Die von der zweite Recheneinrichtung 16 durch die Prüfung ermittelten Informationen werden vorliegend beispielhaft durch die Datenkommunikationseinrichtung 18 auch an die erste Recheneinrichtung 14 übertragen und dort als Information an den Nutzer 20 ausgegeben.

Die zweite Recheneinrichtung 16 kann dabei so ausgebildet sein, dass sie die Prüfung in bestimmten zeitlichen Abständen und/oder zu bestimmten Zeitpunkten und/oder jedes Mal nach einer Änderung der Hardware 40 der Maschine 12 und/oder jedes Mal nach einer Änderung der Software 42 der Maschine 12 durchführt. Zusätzlich oder alternativ kann die zweite Recheneinrichtung 16 so ausgebildet sein, dass sie die Prüfung auf Anfrage des Nutzers 20 nach einer spezifischen und bisher noch nicht vorhandenen Funktion 58 durchführt. Hierzu kann der Nutzer 20 beispielsweise eine entsprechende Eingabe am HMI 28 tätigen.

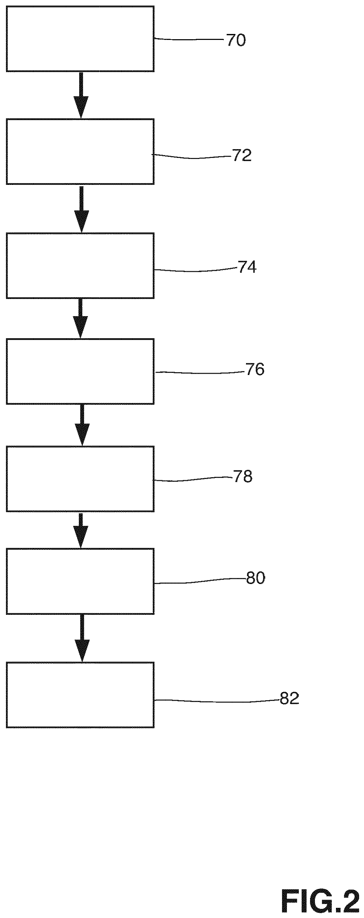

Ein Verfahren zum Betreiben des Maschinensystems 10 wird nun noch unter Bezugnahme auf Figur 2 erläutert: nach einem Start-Funktionsblock 70 wird in einem Funktionsblock 72 die Maschine 12 die erste Recheneinrichtung 14 beim Nutzer 20 bereitgestellt. In einem Funktionsblock 74 wird die zweite Recheneinrichtung 16 beim Anbieter 38 bereitgestellt. In einem Funktionsblock 76 wird die Datenkommunikationseinrichtung 18 bereitgestellt. In einem Funktionsblock 78 wird der Datensatz 52 auf der zweiten Recheneinrichtung 16 abgespeichert, welcher den aktuellen Stand einer Hardware 40 der Maschine 12 und den aktuellen Stand der Software 42 der Maschine 12 wiedergibt. In einem Funktionsblock 80 wird durch die zweite Recheneinrichtung 16 anhand des Datensatzes 52 geprüft, ob die Maschine 12 nach Durchführung einer Maßnahme 66 eine bisher noch nicht vorhandene Funktion 58 aufweisen kann. Das Verfahren endet in einem Ende-Funktionsblock 82.

## Patentansprüche

1. Maschinensystem (10) zum Bearbeiten und/oder Handhaben plattenförmiger Werkstücke, umfassend:
mindestens eine Maschine (12) zum Bearbeiten und/oder Handhaben der Werkstücke mit mindestens einer ersten Recheneinrichtung (14) mit einer Daten- und Softwarespeichereinrichtung (22), Software (24) und einem die Software (24) verarbeitenden Prozessor (26), wobei die Maschine (12) bei einem Nutzer (20) der Maschine (12) angeordnet ist, und
eine zweite Recheneinrichtung (16) mit einer Daten- und Softwarespeichereinrichtung (30), Software (32) und einem die Software (32) verarbeitenden Prozessor (34), die von der ersten Recheneinrichtung (14) entfernt bei einem Anbieter (38) angeordnet ist,
eine Datenkommunikationseinrichtung (18), mit der Daten zwischen der ersten Recheneinrichtung (14) und der zweiten Recheneinrichtung (16) übertragen werden können,
**dadurch gekennzeichnet, dass**
auf der zweiten Recheneinrichtung (16) ein Datensatz (52) abgespeichert ist, der vorzugsweise im Wesentlichen jederzeit den aktuellen Stand mindestens eines Teils einer Hardware (40) der Maschine (12) und den aktuellen Stand mindestens eines Teils einer Software (42) der Maschine (12) wiedergibt,
und dass die zweite Recheneinrichtung (16) ausgebildet ist, um anhand des Datensatzes (52) zu prüfen, ob die Maschine (12) nach Durchführung einer Maßnahme (66) eine bisher noch nicht vorhandene Funktion (58) aufweisen kann und/oder ob durch die Durchführung einer Maßnahme (66) eine bisher bereits vorhandene Funktion (58) verbessert werden kann.

2. Maschinensystem (10) nach Anspruch 1, **dadurch gekennzeichnet, dass** es eine zweite Ausgabeeinrichtung (36) beim Anbieter (38) aufweist, wobei die zweite Recheneinrichtung (16) und das zweite Ausgabeeinrichtung (36) ausgebildet sind, um den Anbieter (38) darüber zu informieren, welche bisher noch nicht vorhandene oder welche verbesserte Funktion (58) die Maschine (12) nach Durchführung einer Maßnahme (66) aufweisen kann.

3. Maschinensystem (10) nach wenigstens einem der vorhergehenden Ansprüche, **dadurch gekennzeichnet, dass** es eine zweite Ausgabeeinrichtung (36) beim Anbieter (38) aufweist, wobei die zweite Recheneinrichtung (16) und die zweite Ausgabeeinrichtung (36) ausgebildet sind, um den Anbieter (38) darüber zu informieren, welche Maßnahme (66) durchgeführt werden muss, damit die Maschine (10) die bisher noch nicht vorhandene oder welche verbesserte Funktion (58) aufweisen kann.

4. Maschinensystem (10) nach wenigstens einem der vorhergehenden Ansprüche, **dadurch gekennzeichnet, dass** es eine erste Ausgabeeinrichtung (28) beim Nutzer (20) aufweist, wobei die erste Ausgabeeinrichtung (28) ausgebildet ist, um den Nutzer (20) darüber zu informieren, welche bisher noch nicht vorhandene Funktion (58) und/oder welche verbesserte Funktion die Maschine (12) nach Durchführung einer Maßnahme (66) aufweisen kann.

5. Maschinensystem (10) nach Anspruch 4, **dadurch gekennzeichnet, dass** die erste Ausgabeeinrichtung (28) ausgebildet ist, um den Nutzer (20) darüber zu informieren, welche Maßnahme (66) durchgeführt werden muss, damit die Maschine (12) die bisher noch nicht vorhandene und/oder die verbesserte Funktion (58) aufweisen kann.

6. Maschinensystem (10) nach wenigstens einem der Ansprüche 4 oder 5, **dadurch gekennzeichnet, dass** die erste Ausgabeeinrichtung (28) ausgebildet ist, um den Nutzer (20) darüber zu informieren, welche Kosten (68) durch die Maßnahme (66) verursacht werden und/oder welche Vorteile durch die Maßnahme (66) erzielt werden.

7. Maschinensystem (10) nach wenigstens einem der vorhergehenden Ansprüche, **dadurch gekennzeichnet, dass** die zweite Recheneinrichtung (16) eine Datenbank (54) aufweist oder auf eine Datenbank (54) zugreifen kann, in der Datensätze (56) abgespeichert sind, welche mögliche Funktionen (58) der Maschine (12) mit hardwaretechnischen Voraussetzungen (60) und/oder softwaretechnischen Voraussetzungen (62) verknüpfen, die die Maschine (12) erfüllen muss, um eine Funktion (58) aufweisen zu können.

8. Maschinensystem (10) nach wenigstens einem der vorhergehenden Ansprüche, **dadurch gekennzeichnet, dass** die zweite Recheneinrichtung (16) ausgebildet ist, um die Prüfung in bestimmten zeitlichen Abständen und/oder zu bestimmten Zeitpunkten und/oder jedes Mal nach einer Änderung der Hardware (40) der Maschine (12) und/oder jedes Mal nach einer Änderung der Software (42) der Maschine (10) durchzuführen.

9. Maschinensystem (10) nach wenigstens einem der vorhergehenden Ansprüche, **dadurch gekennzeichnet, dass** die zweite Recheneinrichtung (16) ausgebildet ist, um die Prüfung auf Anfrage des Nutzers (20) nach einer spezifischen und bisher noch nicht vorhandenen Funktion (58) durchzuführen, wobei die Maschine (12) vorzugsweise eine Eingabeeinrichtung (28) für die Anfrage des Nutzers (20) aufweist.

10. Verfahren zum Betreiben eines Maschinensystems (10) zum Bearbeiten und/oder Handhaben von plattenförmigen Werkstücken, welches folgende Schritte umfasst:
Bereitstellen (72) einer Maschine (12) zum Bearbeiten und/oder Handhaben der Werkstücke mit einer ersten Recheneinrichtung (14) mit einer Daten- und Softwarespeichereinrichtung (22), Software (24) und einem Prozessor (26), wobei die Maschine (12) bei einem Nutzer (20) der Maschine (12) angeordnet ist, und
Bereitstellen (74) einer zweiten Recheneinrichtung (16) mit einer Daten- und Softwarespeichereinrichtung (30), Software (32) und einem Prozessor (34), die von der ersten Recheneinrichtung (14) entfernt bei einem Anbieter (38) angeordnet ist,
Bereitstellen (76) einer Datenkommunikationseinrichtung (18), mit der Daten zwischen der ersten Recheneinrichtung (14) und der zweiten Recheneinrichtung (16) übertragen werden können,
**dadurch gekennzeichnet, dass** es ferner folgende Schritte umfasst:
Bereitstellen (78) eines Datensatzes (52) auf der zweiten Recheneinrichtung (16), wobei der Datensatz (52) im Wesentlichen jederzeit mindestens den aktuellen Stand einer Hardware (40) der Maschine (12) und den aktuellen Stand einer Software (42) der Maschine (12) wiedergibt,
Prüfen (80) durch die zweite Recheneinrichtung (16) anhand des Datensatzes (52), ob die Maschine (12) nach Durchführung einer Maßnahme (66) eine bisher noch nicht vorhandene Funktion (58) aufweisen kann.
